# DEMANDE DE BREVET EUROPEEN

(11) **EP 1 345 164 A1**
(43) Date de publication de la demande: **17.09.2003**
(21) Numéro de dépôt: 02076037.7
(22) Date de dépôt: 14.03.2002
(51) Int. Cl.: G06K 19/07, H04B 1/38

(54) **Dispositif électronique comportant un transpondeur pour assurer un suivi dudit dispositif**

(71) Demandeur: EM Microelectronic-Marin SA, 2074 Marin (CH)
(72) Inventeur: Desjeux, Olivier, 2525 Le Landeron (CH)
(74) Mandataire: Surmely, Gérard

(57) **Abrégé**

Il est décrit un dispositif électronique (1) comprenant des moyens d'émission et/ou de réception (19, 20) de signaux radio-fréquence, ce dispositif comportant un module électronique supportant une pluralité de composants électriques et/ou électroniques comprenant notamment un circuit électronique radio-fréquence (19) couplé à une antenne (20) pour assurer l'émission et/ou réception des signaux radio-fréquence. Le module électronique comporte en outre un circuit transpondeur (50) comportant des moyens de mémorisation (51) d'un identifiant unique (ID) associé au module électronique. Ce circuit transpondeur est couplé, au moins à un instant donné, à l'antenne pour permettre une lecture de l'identifiant unique par communication radio-fréquence via l'antenne du dispositif électronique.

Il est également décrit un procédé pour assurer le suivi du processus de fabrication et/ou le suivi logistique d'un tel dispositif électronique.

## Description

La présente invention se rapporte de manière générale au suivi du processus de fabrication et au suivi logistique de dispositifs électroniques, notamment de dispositifs électroniques comprenant des moyens d'émission et/ou de réception de signaux radio-fréquence, tels des téléphones mobiles ou cellulaires, des radio-émetteurs, des radio-récepteurs ou tout autre émetteur-récepteur susceptible d'émettre et/ou recevoir des signaux radio-fréquence. La présente invention concerne également de tels dispositifs électroniques comprenant des moyens d'émission et/ou de réception de signaux radio-fréquence munis de moyens permettant d'assurer un suivi lors du processus de fabrication et/ou logistique du dispositif. La présente invention concerne encore le suivi après-vente de tels dispositifs électroniques.

Les processus de fabrication et logistique constituent des phases critiques de la production de dispositifs électroniques. Ces processus font de plus en plus appel à des techniques élaborées de montage, d'assemblage et de conditionnement en vue de leur livraison aux distributeurs ou clients. Ces processus sont particulièrement critiques en ce qui concerne la production de dispositifs électroniques de grande consommation et vaste distribution. Un exemple frappant est notamment illustré par le marché des téléphones mobiles ou cellulaires qui est en constante évolution. L'un des paramètres les plus critiques à gérer dans le cadre de la production de tels dispositifs réside dans le suivi du produit, et des sous-ensembles constitutifs de ce produit, durant ses divers stades de fabrication, de conditionnement et de gestion en vue de l'expédition. Il est ainsi désirable d'être en mesure de fournir une information fiable et précise quant à l'état d'avancement de la production, la quantité de produits ou de sous-ensembles assemblés, ou encore l'état des stocks.

A l'heure actuelle, ce suivi est encore typiquement réalisé manuellement ou au moyen de systèmes optiques. Dans ce dernier cas, un marquage codé (du type code barre) est apposé sur le dispositif électronique ou le sous-ensemble dont ont désire assurer le suivi, et des lecteurs optiques (fixes ou portables) sont disposés et utilisés à divers stade de la production pour lire les marquage codé apposés.

Il est également connu de « marquer » des lots de sous-ensembles dans la chaîne de fabrication au moyen, chacun, d'un circuit transpondeur (ci-après dénommé transpondeur) comprenant un identifiant unique associé à chaque lot et permettant d'identifier ce lot ainsi que le stade ou l'étape de fabrication des sous-ensembles de ce lot. Ce transpondeur est un transpondeur susceptible d'être interrogé à distance, notamment par couplage inductif ou électromagnétique avec un champ d'interrogation émis par une unité de lecture/écriture externe. On parle alors typiquement de systèmes d'identification électronique sans contact, communément connus sous l'acronyme systèmes CID (Contactless Identification) ou systèmes RFID (Radio-Frequency Identification). Dans la suite de la présente description, lorsqu'il sera fait usage du terme « transpondeur », on comprendra qu'on se réfère à un circuit transpondeur du type susmentionné.

Un exemple d'un système de suivi du processus de fabrication employant des transpondeurs est par exemple donné dans le document US 5,838,236. Selon cet enseignement, un transpondeur est associé à chaque lot de sous-ensembles (par exemple à une palette ou un support portant ces divers sous-ensembles) et des unités de lecture sont réparties dans la chaîne de fabrication pour lire l'identifiant unique des transpondeurs à divers stades de la fabrication du lot. Selon cet enseignement, le transpondeur est assigné à chaque lot pour toute la durée du processus de fabrication et assigné à un autre lot dès que le processus de fabrication du lot concerné est achevé. On comprendra ainsi que le cycle d'utilisation du transpondeur est limité dans le temps, c'est-à-dire qu'il est limité à une utilisation ponctuelle ou de courte durée.

Une approche similaire à l'approche susmentionnée est également appliquée pour assurer le suivi logistique de produits, c'est-à-dire depuis la sortie de la chaîne de fabrication jusqu'à la préparation pour l'expédition, en passant par l'emballage individuel de chaque produit, ce suivi pouvant le cas échéant être prolongé jusqu'à la livraison du produit au client. Dans le cadre d'une telle approche, un transpondeur autonome est typiquement introduit dans chaque emballage ou lot d'emballages. Il s'agit typiquement de transpondeurs de coûts peu élevés, communément de type passif, c'est-à-dire alimentés par le champ d'interrogation d'une unité de lecture. Dans ce cas également, on comprendra que le cycle d'utilisation du transpondeur est limité dans le temps.

Un but général de la présente invention est notamment de proposer une solution permettant d'assurer un suivi prolongé du produit, non seulement au cours de sa fabrication, mais également au cours du processus logistique ultérieur, voire de prolonger ce suivi après la vente du produit.

Un but plus particulier de la présente invention est de proposer une solution particulièrement adaptée au suivi du processus de fabrication et/ou au suivi logistique de dispositifs électroniques comprenant des moyens d'émission et/ou de réception de signaux radio-fréquence.

Par « dispositif électronique comprenant des moyens d'émission et/ou de réception », on comprendra tout type de dispositif électronique comprenant des moyens susceptibles d'émettre et/ou recevoir des signaux radio-fréquence. Cette notion inclut notamment des dispositifs de télécommunication de signaux vocaux ou de données (téléphones mobiles ou cellulaires - GSM, ... -, téléphones sans fils-DECT, CT2, ... -, TETRA, etc.), des dispositifs dédiés uniquement à la réception ou à l'émission de signaux radio-fréquence ou encore des dispositifs possédant une interface de communication radio-fréquence pour communiquer avec des unités avoisinantes (par exemple des périphériques d'ordinateur, des assistants électroniques de poche, des périphériques mobiles utilisant le standard de communication BlueTooth™, WirelessLAN, etc.).

Un but de la présente invention est encore de proposer une solution qui permette de s'affranchir des problèmes liés aux perturbations électromagnétiques et à la présence de structures de blindage, c'est-à-dire proposer une solution qui soit adaptée à tout dispositif équipé d'un blindage contre les perturbations électromagnétiques externes ou internes. On notera que la présence de blindages est particulièrement contraignante dans le cas des dispositifs électroniques comprenant des moyens d'émission et/ou de réception radio-fréquence, ces blindages pouvant perturber le bon fonctionnement et les capacités de communication des transpondeurs.

La présente invention a ainsi pour premier objet un dispositif électronique comprenant des moyens d'émission et/ou de réception de signaux radio-fréquence dont les caractéristiques sont énoncées à la revendication 1.

Des modes de réalisation avantageux du dispositif susmentionné font l'objet des revendications dépendantes.

La présente invention a également pour objet un téléphone mobile ou cellulaire comportant un dispositif électronique du type susmentionné, ainsi qu'un système comprenant au moins une première et une seconde unité comportant chacune des moyens de communication radio-fréquence pour échanger des données entre les unités au moyen d'au moins une première porteuse radio-fréquence, caractérisé en ce qu'au moins la première unité comporte un dispositif électronique du type susmentionné.

La présente invention a encore pour objet un procédé pour assurer un suivi du processus de fabrication et/ou un suivi logistique d'un dispositif électronique comprenant des moyens d'émission et/ou de réception de signaux radio-fréquence, dont les caractéristiques sont énoncées dans la revendication 12. La présente invention a également pour objet un procédé similaire pour assurer un suivi du processus de fabrication et/ou un suivi logistique d'un dispositif électronique autre que pour l'émission ou la réception de signaux radio-fréquence dont les caractéristiques sont énoncées dans la revendication 14.

Enfin, la présente invention a pour objet un procédé pour assurer le suivi après-vente d'un dispositif électronique comprenant des moyens d'émission et/ou de réception de signaux radio-fréquence dont les caractéristiques sont énoncées dans la revendication 18.

Conformément à ce qui a brièvement été mentionné ci-dessus, on comprendra que le procédé de suivi du processus de fabrication ou de suivi logistique selon la présente invention peut s'appliquer à tout dispositif électronique, quant bien même celui-ci n'est pas équipé d'une antenne pour permettre l'émission ou la réception de signaux radio-fréquence. La présente invention trouve néanmoins une application particulièrement avantageuse dans le cadre du suivi de dispositifs électroniques comprenant des moyens d'émission ou de réception de signaux radio-fréquence.

En effet, selon la présente invention, il peut avantageusement être fait usage de l'antenne d'émission et/ou de réception de signaux radio-fréquence dont est déjà typiquement équipé le dispositif d'émission/réception. Ceci permet de s'affranchir des problèmes liés à la présence de structures de blindage, l'antenne étant spécifiquement conçue et agencée pour ne pas être perturbée par les émissions électromagnétiques émanant de l'électronique du dispositif et ne pas perturber cette même électronique.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1 montre une vue en perspective schématique d'un dispositif électronique comprenant des moyens d'émission et de réception de signaux radio-fréquence, en l'occurrence un téléphone portable ou cellulaire ;
- la figure 2 est une vue en coupe schématique d'une partie du dispositif électronique de la figure 1 ;
- la figure 3 montre un schéma bloc des composants électroniques principaux du dispositif électronique de la figure 1 illustrant un exemple de mise en oeuvre de la présente invention ;
- la figure 4 montre un schéma bloc d'un circuit transpondeur pouvant avantageusement être utilisé dans le cadre de la présente invention ; et
- la figure 5 montre un diagramme de mise en oeuvre d'un procédé permettant d'assurer le suivi du processus de fabrication (A), le suivi logistique (B) et le suivi après-vente (C) d'un dispositif électronique, tel le dispositif de la figure 1.

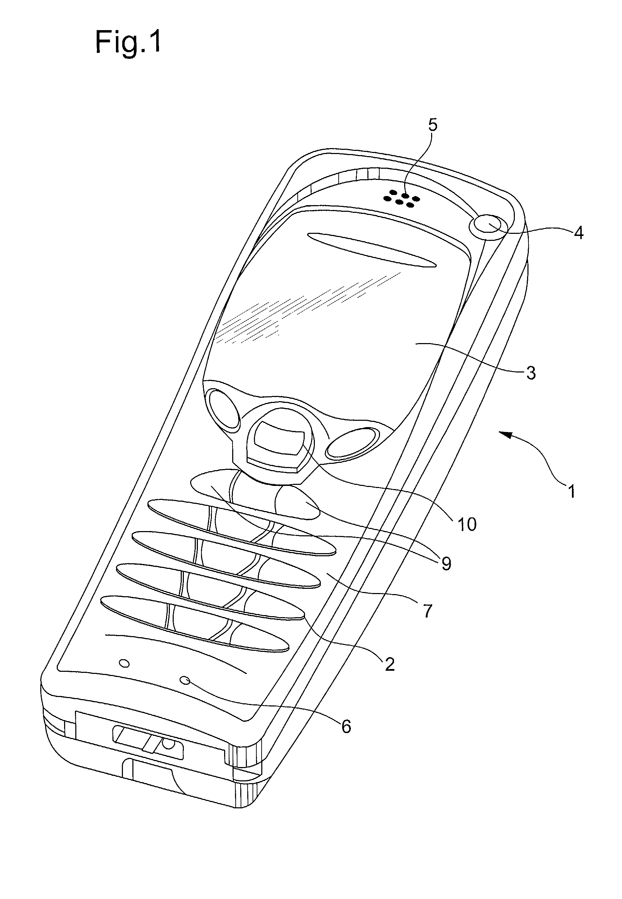

La figure 1 montre une vue en perspective schématique d'un téléphone portable, repéré globalement par la référence numérique 1, constituant un exemple de réalisation particulier d'un dispositif électronique comprenant des moyens d'émission et de réception de signaux radio-fréquence au sens de la présente invention. La présente invention sera décrite en référence à cet exemple de réalisation particulier, mais on insistera sur le fait que cet exemple ne limite nullement les possibilités de mise en oeuvre de l'invention qui, on le rappelle, s'applique à tout dispositif électronique comprenant des moyens d'émission et/ou de réception de signaux radio-fréquence. A titre d'exemple, la présente invention peut s'appliquer par analogie à des périphériques sans fils (tels des souris ou claviers d'ordinateur sans fils) ou des dispositifs portables possédant des fonctionnalité d'émission et/ou de réception de signaux radio-fréquence (par exemple des assistants électroniques de poches ou PDA).

En se référant à nouveau à la figure 1, on constatera que le téléphone portable comprend notamment une interface utilisateur comportant un clavier 2, un écran d'affichage 3, un interrupteur de mise en marche 4, un haut-parleur 5 et un microphone 6 (seules les ouvertures de ces deux derniers éléments étant illustrées). Le clavier 2 comporte typiquement un premier groupe 7 de touches alphanumériques, deux touches de sélection 8 associées à des menus affichés sur l'écran 3, deux touches pour la gestion des appels 9, ainsi que touche ou organe de navigation 10.

Un description détaillée d'un tel téléphone (adapté en particulier pour opérer selon le standard de téléphonie mobile GSM - à 900/1800 MHz) est donnée dans la demande EP 1 020 947 A2 au nom de Nokia, un exemple de ce même téléphone étant par exemple commercialisé par cette même société, notamment sous la référence 3210™. On ne s'attardera en conséquence pas longuement sur la construction de ce téléphone. Le lecteur intéressé pourra se référer au document susmentionné pour une description détaillée de ce téléphone, une particularité de ce dernier étant la présence d'une antenne d'émission/réception interne, en l'occurrence une antenne de type PIFA (Planar Inverted-F Antenna) comprenant une métallisation déposée sur un support diélectrique espacée d'un plan de masse.

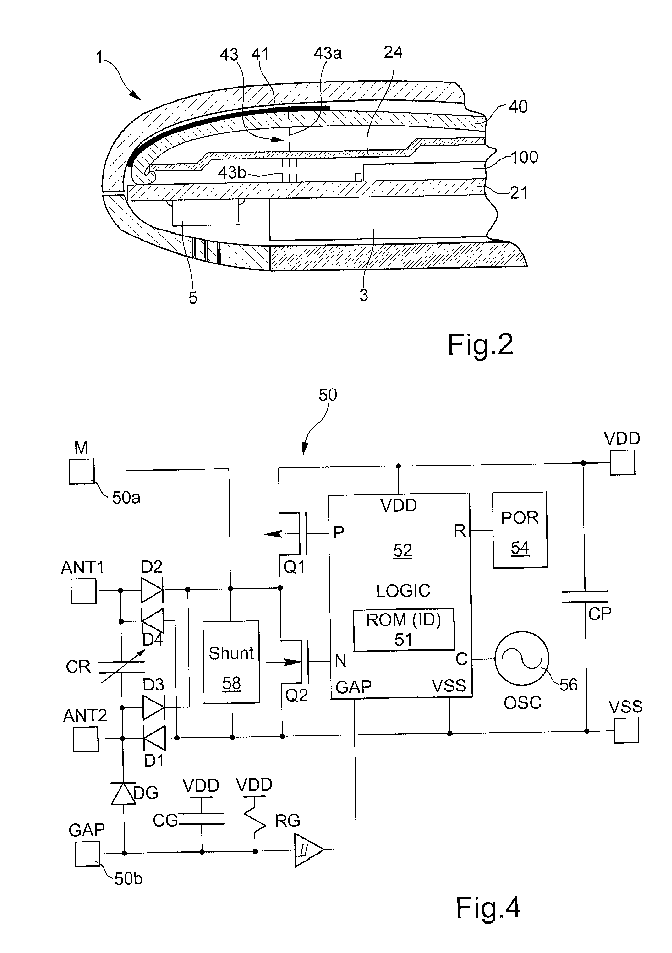

La figure 2 illustre schématiquement une vue en coupe transversale de la partie supérieure du téléphone 1 de la figure 1 où l'on peut notamment voir, disposés sur une première face d'une plaquette de circuit imprimé (PCB) 21, le haut-parleur 5 et l'écran d'affichage 3 (typiquement un affichage à cristaux liquides LCD). L'autre face du PCB 21 supporte divers composants électriques et/ou électroniques assurant notamment les fonctions d'émission/réception radio-fréquence du téléphone, ces composants étant globalement indiqués par la référence numérique 100. On utilisera dans la suite de la description la terminologie « module électronique » pour désigner le sous-ensemble comprenant au moins le PCB 21 et les composants électriques et électroniques qui y sont montés, cette notion englobant le cas échéant également l'antenne (élément radiant et plan de masse).

Un blindage 24 contre les perturbations électromagnétiques, formé typiquement d'une plaque de métal, est par ailleurs disposé du côté de cette face du PCB 21. Ce blindage 24 est typiquement connecté à une masse (non représentée) sur le PCB 21 et forme en outre un plan de masse pour l'antenne, cette dernière comprenant une métallisation 41 agissant comme élément radiant de l'antenne et disposée sur une surface d'un corps diélectrique 40. Une connexion électrique 43 entre le PCB 21 et le blindage, d'une part, (43b) et la métallisation 41, d'autre part (43a), est en outre pratiquée. Comme illustré dans la figure 2, le tout est enfermé dans un corps d'habillage formé typiquement de deux coques en matériau plastique.

On notera à nouveau que la structure d'antenne illustrée schématiquement en figure 2 est donnée à titre purement illustratif et pourrait par exemple être réalisée sur une face (intérieure) du corps d'habillage ou alternativement sous la forme d'une antenne classique externe, par exemple du type hélicoïdal.

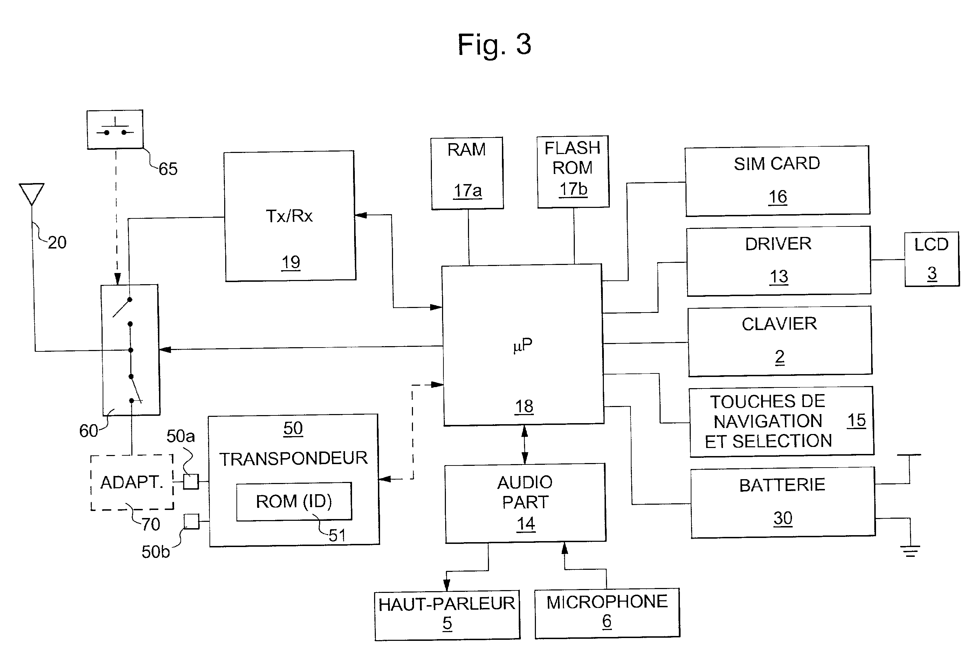

La figure 3 montre un schéma bloc des composants électroniques principaux du dispositif électronique de la figure 1, ce schéma illustrant un exemple de mise en oeuvre de la présente invention. On y trouve notamment une unité centrale de traitement ou microprocesseur 18 autour duquel sont agencées diverses unités périphériques. En particulier, on y retrouve le clavier 2 et les touches de navigation et de sélection (indiquées ici par la référence numérique 15), l'affichage 3 accompagné de son circuit de commande 13, ainsi que le haut-parleur 5 et le microphone 6 connectés à un circuit de conversion audio 14. Ce dernier traduit typiquement les signaux codés reçus en signaux vocaux qui sont reproduits par le haut-parleur 5 et, inversement, les signaux vocaux captés par le microphone 6 en signaux codés en vue de leur retransmission.

Outre les unités susmentionnées, le dispositif électronique comporte en outre des moyens de mémorisation 17a, 17b (typiquement une mémoire vive ou RAM 17a et une mémoire reprogrammable 17b du type mémoire EEPROM ou FLASH). Le dispositif comporte encore une carte SIM 16 (Subscriber Identity Module) pour l'identification de l'abonné ainsi qu'une source d'alimentation en énergie électrique 30, typiquement une batterie rechargeable. Cette dernière se présente typiquement sous la forme d'un élément amovible susceptible d'être connectée ou déconnectée du téléphone portable.

Le dispositif électronique comprend enfin des moyens d'émission/réception de signaux radio-fréquence comprenant notamment une antenne d'émission/réception 20 couplée à un circuit électronique radio-fréquence 19 chargé notamment de la conversion et de la modulation/démodulation des signaux électromagnétiques radio-fréquence.

Selon l'invention, le dispositif électronique comporte par ailleurs un circuit transpondeur 50 comportant des moyens de mémorisation 51 (typiquement une ROM) d'un identifiant unique, désigné ID, associé au module électronique du dispositif (à savoir notamment le PCB et les composants qui y sont montés). Ce circuit transpondeur est préférablement un circuit transpondeur de type passif, c'est-à-dire un circuit alimenté par la tension dérivée du champ électromagnétique d'interrogation. Comme on le verra ultérieurement, ce type de circuit est préférablement utilisé afin d'assurer un suivi du produit durant tout son processus de fabrication et son processus logistique, voire même après sa vente au client.

Le circuit transpondeur 50 comporte par ailleurs deux bornes de contact, désignées 50a et 50b, au moyen desquelles il est possible de pratiquer une lecture par contact direct de l'identifiant unique ID. Comme on le verra ultérieurement, ces bornes 50a et 50b sont mises à profit pour lire l'identifiant ID au cours de la fabrication du dispositif à un stade où l'antenne n'est pas encore couplée au circuit transpondeur 50. On notera que l'identifiant unique ID peut être mémorisé en parallèle dans la mémoire reprogrammable 17b du dispositif électronique. A titre d'alternative, comme illustré par des traits interrompus, le microprocesseur 18 pourrait être en connexion directe avec le circuit transpondeur 50.

Comme illustré dans la figure 2, le circuit transpondeur 50 est couplé à l'antenne 20 pour permettre une lecture de l'identifiant unique ID par communication radio-fréquence via cette antenne 20. Dans cet exemple, on constatera que le circuit transpondeur utilise avantageusement la même antenne que le circuit électronique radio-fréquence, c'est-à-dire l'antenne du téléphone (et non une antenne additionnelle). Ceci a notamment pour avantage une simplification de la construction ainsi que de permettre de disposer le circuit transpondeur 50 directement sur le PCB (voire d'intégrer ce circuit sur un unique circuit intégré avec les autres fonctions du téléphone), et ceci sans avoir à se soucier des problèmes liés à la présence nécessaire du blindage contre les perturbations électromagnétiques.

Il est par ailleurs prévu des moyens additionnels 60 pour permettre de sélectivement coupler le circuit électronique radio-fréquence 19 ou le circuit transpondeur 50 à l'antenne 20. Ces moyens de commutation 60 peuvent par exemple être réalisés sous la forme d'une paire de commutateurs commandés en opposition, par exemple par le microprocesseur 18 (ou en réponse à une action sur un dispositif de commande spécifique, par exemple un commutateur spécifique 65).

Plus particulièrement, il sera avantageux de prévoir, notamment dans le cadre d'une mise en oeuvre de l'invention dans un téléphone portable comme présentement décrit, que le circuit transpondeur 50 soit automatiquement couplé à l'antenne tant que la batterie (30 dans la figure 2) n'est pas connectée au dispositif électronique pour en assurer l'alimentation. On notera en effet que les téléphones portables sont typiquement conditionnés de sorte que la batterie n'est pas connectée (tout du moins électriquement) avant livraison à l'acheteur (mis à part une éventuelle connexion en cours de fabrication pour pratiquer certains tests). En prévoyant que les moyens de commutation 60 couplent automatiquement, dans ce cas, le circuit transpondeur 50 à l'antenne 20, on comprendra que le circuit transpondeur pourra être mis à profit pour assurer un suivi du processus de fabrication et/ou un suivi logistique du dispositif électronique, même après la vente de ce dernier.

En référence à la figure 3, on notera que le dispositif électronique peut en outre comporter un circuit d'adaptation d'antenne 70 pouvant être disposé, au choix, entre, d'une part, l'antenne 20, et, d'autre part, le circuit électronique radio-fréquence 19 ou le circuit transpondeur 50. On notera en effet que, dans un certain nombre d'applications, le circuit électronique radio-fréquence 19 peut être agencé pour fonctionner dans une gamme de fréquences faisant l'objet d'une allocation spécifique nécessitant souvent l'octroi d'une licence d'exploitation délivrée par les instances nationales compétentes. Ainsi, par exemple, les réseaux de téléphonie GSM emploient typiquement des fréquences standards de l'ordre de 900 MHz et/ou 1800 MHz qui font l'objet d'une réglementation spécifique. Dans ce cas, le circuit transpondeur 50 sera ainsi agencé pour opérer, en dehors de ces fréquences standards, à une fréquence néanmoins proche de ces dernières. Dans le cadre d'une application GSM, le circuit transpondeur 50 peut par exemple être agencé pour opérer à une fréquence de l'ordre de 868 MHz (en Europe par exemple), fréquence se trouvant dans une gamme de fréquences libre d'exploitation. Dans cet exemple, le circuit d'adaptation 70 sera en conséquence agencé pour ajuster les caractéristiques de l'antenne 20 aux caractéristiques nécessaires pour l'emploi du circuit transpondeur 50 (ou inversement pour adapter les caractéristiques de l'antenne aux caractéristiques du circuit électronique radio-fréquence 19). Dans le cadre d'autres applications faisant appel à des fréquences de travail libres d'exploitation, on comprendra qu'un tel circuit d'adaptation d'antenne 70 ne sera pas nécessaire.

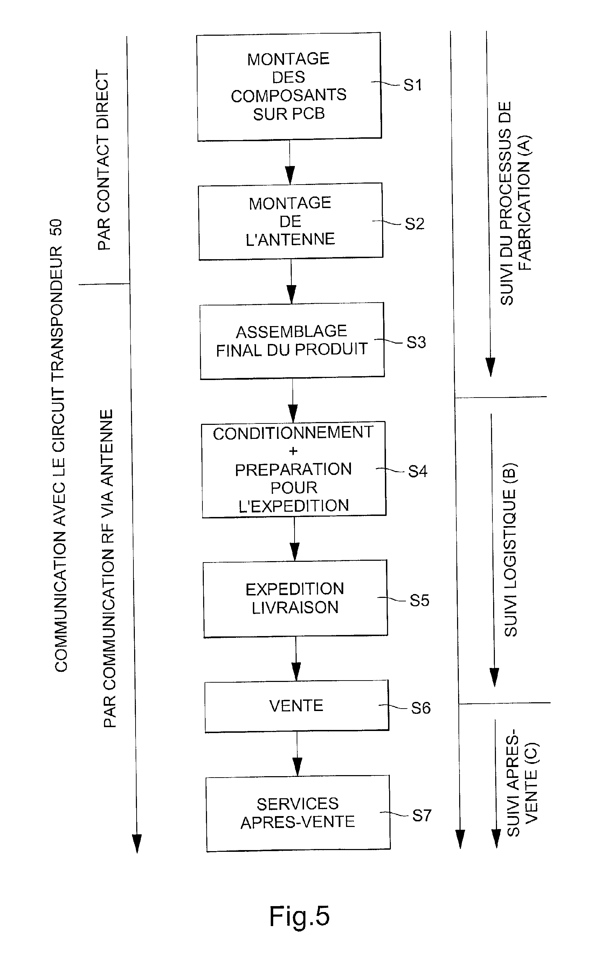

Dans la figure 4, il est illustré un exemple de réalisation plus détaillé du circuit transpondeur 50. Cet exemple de réalisation est basé sur un produit déjà commercialisé par le présent Déposant, la société EM Microelectronic-Marin SA, sous la référence P4022, « Multi Frequency Contactless Identification Device », dont la spécifique technique accessible au public est incorporée ici par référence. Ce circuit transpondeur 50 est parfaitement adapté pour une utilisation dans le cadre de la présente invention en ce sens qu'il peut opérer sur une vaste gamme de fréquences de travail, par exemple à des fréquences de 125 kHz ou 13.56 MHz (fréquences typiques pour des applications RFID opérant par couplage inductif) ou à des fréquences entre 100 MHz et 2.54 GHz, approximativement (pour des applications opérant par couplage électromagnétique radio-fréquence). On comprendra bien évidemment que ce circuit spécifique n'est nullement limitatif des possibilités d'application de la présente invention.

Le diagramme de la figure 4, qui reprend pour l'essentiel les éléments de la figure 5 de la spécification technique du produit P4022 susmentionné, montre que ce circuit transpondeur 50 comporte notamment un bloc logique 52 (comprenant notamment des moyens de mémorisation ROM 51 de l'identifiant unique ID - dans le cas d'espèce un mot de 64 bits), une cellule de mise à zéro sous tension ou POR (Power On Reset) 54, un oscillateur RC interne 56, un régulateur de tension (Shunt regulator) 58 et divers composants électriques qui seront brièvement présentés ci-après.

La capacité CP forme une capacité de stockage qui est chargée par la tension dérivée du champ électromagnétique ambiant et assure l'alimentation du circuit transpondeur 50. Cette capacité CP est à ce titre connectée entre les bornes d'alimentation VDD et VSS du circuit. On notera qu'une capacité additionnelle, externe, (non représentée dans la figure 4) est typiquement connectée en parallèle avec la capacité de stockage CP.

Le jeu de diodes D1, D2, D3, D4 forme un redresseur double alternance interne qui est utilisé pour le redressement, à faible fréquence (typ. 125 kHz), de la tension dérivée du champ électromagnétique ambiant (entre les bornes ANT1 et ANT2) et le chargement de la capacité CP. La capacité CR forme quant à elle une capacité ajustable permettant d'ajuster la fréquence de résonance de l'antenne qui, pour ce type d'application basse fréquence, comporte une bobine ou inductance connectée entre les bornes ANT1 et ANT2 du circuit, comme illustré plus en détail dans la figure 2 de la spécification technique du produit P4022 (figure qui n'est pas reprise ici par souci de simplification).

Pour des applications à porteuse moyenne ou haute fréquence (de l'ordre de 13.56 MHz ou typiquement supérieure à 100 MHz), la capacité CR et le redresseur double alternance D1, D2, D3, D4 n'entrent pas en jeu. L'antenne (par exemple l'antenne 20 de la figure 3) est connectée à la borne désignée M du circuit. Un exemple d'implémentation haute fréquence est donné dans la figure 4 de la spécification du produit P4022.

Dans le cadre des applications susmentionnées, on notera que des composants électriques externes additionnels sont ou peuvent être connectés au circuit transpondeur 50. En particulier, des diodes Schottky micro-ondes sont typiquement connectées sur les bornes désignées GAP et M du circuit transpondeur 50, comme illustré à titre d'exemple par les figures 2 à 4 de la spécification technique susmentionnée.

Le régulateur de tension 58 a essentiellement deux fonctions, l'une de limiter la tension aux bornes du bloc logique 52, et l'autre, pour les applications haute fréquence, de limiter la tension aux bornes des diodes Schottky externes. L'oscillateur RC 56 délivre un signal d'horloge au bloc logique qui définit notamment la fréquence de cadencement du bloc logique et des données délivrées. La cellule POR 54 assure quant à elle une mise à zéro adéquate du bloc logique lors de la mise sous tension du circuit.

Le transistor à canal n Q2 est utilisé pour moduler la bobine ou l'antenne du transpondeur. Lorsqu'il est activé, il charge l'antenne ou la bobine, changeant ainsi la charge vue par l'antenne ou la bobine du lecteur externe et, par là-même, la quantité d'énergie réfléchie sur le lecteur. Le transistor à canal p Q1 est quant à lui désactivé lorsque le transistor de modulation Q2 est activé afin d'éviter que ce dernier ne décharge la capacité de stockage CP.

La diode PG est utilisée pour détecter une interruption dans le champ électromagnétique d'interrogation. Le filtre passe-bas (représenté schématiquement par la capacité CG et la résistance RG) est notamment utilisé pour filtrer continuellement la porteuse dans les applications haute fréquence. Dès lors que la porteuse haute-fréquence est interrompue, l'entrée GAP du bloc logique 52 est amenée à l'état haut avec une réponse déterminée par la constante de temps du filtre. Pour les applications à très basse fréquence, l'entrée GAP du bloc logique 52 est amenée à l'état haut et bas à chaque cycle de la porteuse et reste à l'état haut lors de l'interruption de cette porteuse. On notera qu'une bascule de Schmitt (ou trigger de Schmitt) est également disposée en entrée de la borne GAP du bloc logique 52.

On ne s'attardera pas plus longtemps sur la description du circuit transpondeur 50 de la figure 4. On pourra se référer à la spécification technique du produit P4022 pour de plus amples informations au sujet du fonctionnement de ce circuit, notamment en ce qui concerne l'encodage des données et les protocoles anti-collisions pouvant être adoptés.

Enfin, en référence à la figure 5, on décrira un exemple de mise en oeuvre de l'invention pour assurer le suivi du processus de fabrication du produit, désigné A, son suivi logistique, désigné B, et son suivi après-vente, désigné C. Il est important de noter que cet exemple de mise en oeuvre est purement illustratif et que certaines étapes, notamment du processus de fabrication, peuvent se succéder dans un ordre différent (en particulier le montage de l'antenne). Les étapes intermédiaires de tests n'ont par ailleurs pas été illustrées.

Selon la figure 5, on a ainsi illustré une succession d'étape, en soi typique, du processus de vie d'un dispositif électronique, tel le téléphone portable de la figure 1. A l'étape S1, on procède typiquement à une étape d'assemblage consistant notamment à monter les divers composants électriques et électroniques du dispositif sur le PCB (cette étape étant précédée d'autres étapes de fabrication qui n'ont pas été schématisées par souci de simplification). L'étape S1 est suivie, dans cet exemple, du montage de l'antenne du dispositif électronique. Dans l'exemple illustré aux figures 1 et 2, il s'agit dans ce cas du montage du blindage 24, du corps diélectrique 40 supportant l'élément radiant 41 et de la connexion 43 de l'antenne. Cette étape est suivie par une étape d'assemblage final S3 consistant notamment à effectuer les dernières connexions électriques des composants et à monter le corps d'habillage du dispositif électronique, étape S3 qui se termine en outre communément par un test de fonctionnement du dispositif. Cette étape S3 marque la fin du processus de fabrication proprement dit du dispositif électronique.

Suivent alors diverses étapes dites logistiques consistant notamment à conditionner les produits assemblés dans leur emballage respectif et à la préparer pour l'expédition (étape S4), suivi de l'expédition ou livraison proprement dite (étape S5), jusqu'à la vente du produit au client (étape S6) qui marque la fin du processus logistique. Suit alors une étape (S7) durant laquelle le client est susceptible de faire appel aux services après-vente du fabricant, notamment son service de garantie ou encore son programme de fidélisation. Cette dernière étape S7 symbolise le processus de vie « après-vente » du produit.

Le suivi du dispositif électronique est préférablement assuré durant toutes ces étapes S1 à S7 selon un schéma général qui est le suivant. Durant le processus de fabrication, dès lors que le circuit transpondeur 50 est monté sur le PCB (ce dernier pouvant être intégré sur un composant électronique remplissant d'autres fonctions comme cela a déjà été mentionné), un suivi du processus peut être assuré par lecture de l'identifiant unique de ce circuit transpondeur. L'étape de montage de l'antenne pouvant intervenir à un stade ultérieur de fabrication, tant que l'antenne n'est pas connectée au module électronique, la lecture de l'identifiant pourra être opérer par contact direct avec le module électronique, notamment lors de chaque phase de test. A ce stade de la fabrication, on notera que ceci ne constitue pas un problème majeur étant donné que d'autres composants électriques ou électroniques doivent également être testés. En outre, le module électronique est encore aisément accessible. Pour permettre de lire l'identifiant unique du circuit transpondeur, il conviendra de prévoir une paire de bornes de contact à ce circuit.

Une fois l'antenne montée (étape S2), la lecture de l'identifiant pourra être effectuée directement par communication radio-fréquence avec le circuit transpondeur 50, par l'intermédiaire de l'antenne ainsi connectée. Cette communication radio-fréquence pourra être effectuée durant toutes les étapes ultérieures, y compris pour assurer le suivi après-vente du produit.

L'avantage de la présente invention est considérable en ce sens que le suivi du produit, durant toutes ces étapes de vie, est assuré par un unique et même circuit transpondeur. On valorise de la sorte grandement l'utilisation d'un tel circuit transpondeur en ne limitant pas son application à une unique phase du processus de vie du produit. Ce circuit transpondeur présente en outre un coût très raisonnable qui n'a que peu d'impact sur le coût global de fabrication du dispositif électronique. Au contraire, une valeur significative est ajoutée au produit par l'adjonction de ce circuit transpondeur.

Techniquement parlant, comme cela a déjà été mentionné plus haut, l'utilisation de l'antenne existante d'un dispositif électronique équipé de moyens de communication radio-fréquence conduit à une rationalisation de la construction du dispositif électronique et permet par ailleurs de s'affranchir des problèmes dus à la présence nécessaire de structure de blindage.

On notera que le procédé permettant d'assurer le suivi du processus de fabrication, le suivi logistique et le suivi après-vente d'un dispositif électronique qui a été présenté, s'applique non seulement et avantageusement à des dispositifs électroniques munis de moyens de communication radio-fréquence, mais également à des dispositifs électroniques dépourvus de tels moyens.

On comprendra finalement que diverses modifications et/ou améliorations évidentes pour l'homme du métier peuvent être apportées aux modes de réalisation décrits dans la présente description sans sortir du cadre de l'invention défini par les revendications annexées. En particulier, bien que le circuit transpondeur présenté dans la présente demande (en référence à la spécification du produit P4022 susmentionné) soit accessible en lecture uniquement, il convient de mentionner qu'un circuit transpondeur adapté pour permettre une modification des données mémorisées par ce circuit transpondeur pourrait alternativement être utilisé, par exemple dans l'optique de stocker une information relative à l'état d'avancement du module électronique et du dispositif au cours du processus de fabrication.

## Revendications

1. Dispositif électronique (1) comprenant des moyens d'émission et/ou de réception (19, 20) de signaux radio-fréquence, ce dispositif comportant un module électronique supportant une pluralité de composants électriques et/ou électroniques comprenant notamment un circuit électronique radio-fréquence (19) couplé à une antenne (20) pour assurer l'émission et/ou réception desdits signaux radio-fréquence,
**caractérisé en ce que** ledit module électronique comporte en outre un circuit transpondeur (50) comportant des moyens de mémorisation (51) d'un identifiant unique (ID) associé au dit module électronique et **en ce que** ledit circuit transpondeur (50) est agencé pour être couplé, au moins momentanément, à ladite antenne (20) pour permettre une lecture dudit identifiant unique (ID) par communication radio-fréquence via ladite antenne (20).

2. Dispositif électronique selon la revendication 1, **caractérisé en ce que** ledit circuit transpondeur (50) est un circuit transpondeur de type passif susceptible d'être alimenté par lesdits signaux radio-fréquence.

3. Dispositif électronique selon la revendication 1 ou 2, **caractérisé en ce que** ledit module électronique comporte en outre des moyens de commutation (60) pour sélectivement coupler ledit circuit électronique radio-fréquence (19) ou ledit circuit transpondeur (50) à ladite antenne (20).

4. Dispositif électronique selon la revendication 3, **caractérisé en ce qu'**il comporte en outre une source d'alimentation (30) en énergie électrique susceptible d'être connectée au dit dispositif électronique (1) notamment afin d'assurer l'alimentation en énergie électrique dudit module électronique, et **en ce que** lesdits moyens de commutation (60) répondent notamment à une non-connexion de ladite source d'alimentation (30) en couplant ledit circuit transpondeur (50) à ladite antenne (20).

5. Dispositif électronique selon la revendication 3, **caractérisé en ce que** ledit module électronique comporte en outre des moyens de commande (18 ; 65) pour contrôler lesdits moyens de commutation (60) en réponse à une action d'un utilisateur et coupler ledit circuit transpondeur (50) à ladite antenne (20) en réponse à cette action.

6. Dispositif électronique selon l'une quelconque des revendications précédentes, **caractérisé en ce que** ledit circuit électronique radio-fréquence (19) est agencé pour fonctionner à une fréquence standard d'un système de radiocommunication et **en ce que** ledit circuit transpondeur (50) est agencé pour fonctionner à une fréquence proche ou égale à ladite fréquence standard.

7. Dispositif électronique selon la revendication 6, **caractérisé en ce qu'**il comporte en outre un circuit d'adaptation (70) de l'antenne couplé entre, d'une part, l'antenne (20) et, d'autre part, ledit circuit électronique radio-fréquence (19) ou ledit circuit transpondeur (50).

8. Dispositif électronique selon l'une quelconque des revendications précédentes, **caractérisé en ce que** ledit circuit transpondeur (50) comporte en outre une paire de bornes de contact pour lire ledit identifiant (ID) par contact direct avec ledit circuit transpondeur.

9. Dispositif électronique selon l'une quelconque des revendications précédentes, **caractérisé en ce qu'**il comporte en outre un corps d'habillage, et **en ce que** ladite antenne (20) est disposée ou formée sur ledit corps d'habillage.

10. Téléphone mobile ou cellulaire comportant un dispositif électronique selon l'une quelconque des revendications 1 à 9.

11. Système comprenant au moins une première et une seconde unité comportant chacune des moyens de communication radio-fréquence pour échanger des données entre lesdites unités au moyen d'au moins une première porteuse radio-fréquence, **caractérisé en ce qu'**au moins ladite première unité comporte un dispositif électronique selon l'une quelconque des revendications 1 à 9.

12. Procédé pour assurer un suivi du processus de fabrication et/ou un suivi logistique d'un dispositif électronique (1) comprenant des moyens d'émission et/ou de réception (19, 20) de signaux radio-fréquence, notamment un dispositif électronique selon l'une quelconque des revendications 1 à 9, ce dispositif électronique comportant un module électronique supportant une pluralité de composants électriques et/ou électroniques comprenant notamment un circuit électronique radio-fréquence (19) couplé à une antenne (20) pour assurer l'émission et/ou réception desdits signaux radio-fréquence,
la fabrication dudit dispositif électronique comprenant plusieurs étapes d'assemblage (S1, S2, S3) dont une étape d'assemblage (S1) consistant à monter ladite pluralité de composants électriques et/ou électronique sur ledit module électronique et à former des connexions électriques entre ces composants,
**caractérisé en ce que** ledit module électronique comporte en outre un circuit transpondeur (50) comportant des moyens de mémorisation (51) d'un identifiant unique (ID) associé au dit module électronique, ladite étape d'assemblage (S1) consistant en outre à coupler ledit circuit transpondeur (50) à ladite antenne (20),
et **en ce que** ledit identifiant unique (ID) est lu, au moins à un instant donné durant le processus de fabrication et/ou logistique, par communication radio-fréquence avec ledit circuit transpondeur (50), via ladite antenne (20).

13. Procédé selon la revendication 12, **caractérisé en ce qu'**une source d'alimentation (30) en énergie électrique est susceptible d'être connectée au dit dispositif électronique (1) une fois assemblé afin de notamment assurer l'alimentation en énergie électrique dudit module électronique, et **en ce que** tant que cette source d'alimentation n'est pas connectée au dit dispositif électronique (1), ledit circuit transpondeur (50) est couplé à ladite antenne (20) afin de permettre une lecture dudit identifiant (ID) unique via cette antenne (20).

14. Procédé pour assurer un suivi du processus de fabrication et/ou un suivi logistique d'un dispositif électronique comportant un module électronique supportant une pluralité de composants électriques et/ou électroniques,
la fabrication dudit dispositif électronique comprenant plusieurs étapes d'assemblage (S1, S2, S3) dont une étape d'assemblage (S1) consistant à monter ladite pluralité de composants électriques et/ou électronique sur ledit module électronique et à former des connexions électriques entre ces composants,
**caractérisé en ce que** ledit module électronique comporte en outre un circuit transpondeur (50) comportant des moyens de mémorisation (51) d'un identifiant unique (ID) associé au dit module électronique, ladite étape d'assemblage (S1) consistant en outre à (S2) monter une antenne sur ledit dispositif électronique et à coupler ladite antenne au dit circuit transpondeur (50),
et **en ce que** ledit identifiant unique (ID) est lu, au moins à un instant donné durant le processus de fabrication et/ou logistique, par communication radio-fréquence avec ledit circuit transpondeur (50), via ladite antenne.

15. Procédé selon l'une quelconque des revendications 12 à 14, **caractérisé en ce que**, tant que ladite antenne (20) n'est pas couplée au dit circuit transpondeur (50), la lecture dudit identifiant unique est opérée par un contact direct avec des première et seconde bornes dudit circuit transpondeur (50), et **en ce que**, dès lors que l'antenne (20) est couplée au dit circuit transpondeur (50), la lecture dudit identifiant unique est opérée par ladite communication radio-fréquence avec ledit circuit transpondeur (50), via ladite antenne (20).

16. Procédé selon la revendication 15, **caractérisé en ce que** lesdites étapes d'assemblage (S1, S2, S3) du dispositif électronique incluent en outre une étape d'assemblage (S3) d'un corps d'habillage dudit dispositif électronique et **en ce que** ladite antenne est disposée ou formée sur ledit corps d'habillage, ladite communication radio-fréquence avec ledit circuit radio-fréquence (50), via ladite antenne, n'étant opérée qu'après assemblage dudit corps d'habillage.

17. Procédé selon l'une quelconque des revendications 12 à 16, **caractérisé en ce que** ledit circuit transpondeur (50) assure en outre un suivi après-vente (S7) dudit dispositif électronique.

18. Procédé pour assurer un suivi après-vente d'un dispositif électronique (1) comprenant des moyens d'émission et/ou de réception (19, 20) de signaux radio-fréquence, notamment un dispositif électronique selon l'une quelconque des revendications 1 à 9, ce dispositif électronique (1) comportant un module électronique supportant une pluralité de composants électriques et/ou électroniques comprenant notamment un circuit électronique radio-fréquence (19) couplé à une antenne (20) pour assurer l'émission et/ou réception desdits signaux radio-fréquence,
**caractérisé en ce qu'**il comprend :
- la fourniture, sur ledit module électronique, d'un circuit transpondeur (50) susceptible d'être couplé à ladite antenne (20) et comportant des moyens de mémorisation (51) d'un identifiant unique (ID) associé au dit module électronique ; et
- la lecture dudit identifiant unique (ID) par communication radio-fréquence via ladite antenne (20) du dispositif électronique.
